# EUROPEAN PATENT APPLICATION

(11) **EP 4 527 549 A2**
(43) Date of publication of application: **26.03.2025**
(21) Application number: 24198121.6
(22) Date of filing: 03.09.2024
(51) Int. Cl.: B23Q 11/00, B23C 3/35, B23C 5/10, B23Q 35/128

(54) **A KEY CUTTING MACHINE**

(30) Priority: 19.09.2023 IT 202300019242
(71) Applicant: SILCA S.p.A., 31029 Vittorio Veneto (TV) (IT)
(72) Inventor: PIGATTI, Giorgio, 31016 Cordignano (TV) (IT); VARONE, Gianfranco, 31029 Vittorio Veneto (TV) (IT); DA RODDA, Oreste, 31029 Vittorio Veneto (TV) (IT)
(74) Representative: Braidotti, Andrea

(57) **Abstract**

Key cutting machine with a base (2), with a clamp (4) for locking a blank key to be cut, with a milling unit (6) having at least one cutter (12) for making cutting notches in said key, and with means for the relative movement of said cutter with respect to said clamp, characterised in that it comprises a compressed air generator (22) mounted on said base (2) and connected via a small tube or flexible duct (20) to a nozzle (18) which is mounted on said milling unit (6) and which is oriented towards the processing area of said cutter (12).

## Description

### TECHNICAL FIELD

The present invention relates to a key cutting machine.

### STATE OF THE ART

Key cutting machines are known, which are designed to cut a blank key, that is, to transform it into a key with a unique bitting, consistent with the cylinder or in any case with the device to be operated.

The key blank is cut using one or more cutters mounted in a special milling unit, which the key cutting machine is provided with, and operating on the key blank, locked in a clamp of the key cutting machine, so as to make notches in it in the number, shape and arrangement corresponding to the cut to be made.

There are various types of key cutting machines, although the most common ones are currently code cutting machines, that is, machines wherein the blank key to be cut is locked on a clamp and a milling unit, wherein one or more cutters are mounted, carries out the cutting on the basis of a code stored in the machine's control unit and corresponding to that cutting. Generally, the clamp is provided with horizontal movements in two orthogonal directions, so as to position the point on the key, wherein a cutting notch must be made, exactly below the cutter suitable for making that notch, while the milling unit, which is provided with one or more chucks suitable for holding a corresponding number of cutters, is provided with both a rotation movement of the chucks and a vertical movement towards and away from the key locked in the clamp.

All key cutting machines, regardless of their type, require that for a correct cutting processing, the processing area of the cutter must be clean, that is, it must be free from residues from a previous processing, such as shavings or metal dust, which could cause false contacts and, in general, alterations to the normal processing cycle of the machine.

For this reason it is generally necessary to keep the processing area thoroughly clean.

A fairly simple solution to perform this cleaning consists of periodic manual intervention by the operator with a brush. This requires virtually no equipment, but often involves unsatisfactory and incomplete work, which still requires direct intervention by the operator.

Another new solution consists in carrying out this cleaning pneumatically, that is, by bringing a nozzle close to the processing area of the machine that can send a blast of air (or create suction) at the processing area. This solution has proven to be much more valid, both because it has allowed the residues of previous processes to be removed more effectively from the processing area of the machine, and because in the case of a sucked air flow it can also capture those residues and not disperse them into the environment. At the same time, this solution has also brought about some inconveniences, and among these, in particular, the need to bring compressed air to the cutting machine. While in certain situations this is not a problem, as very often a compressed air generator is available on site, in other cases, wherein it is not available, it is necessary to bring it expressly with system complexity and an increase in the overall dimensions and connections of the cutting machine to fixed installations.

Another drawback is that the gun that sprays the air jet must be permanently connected to a compressed air transport duct and this makes it inconvenient for the operator to operate and requires operations specifically dedicated to this task.

Finally, the fact that it requires connection to an external compressed air generator makes the correct functioning of the machine dependent on the availability of compressed air and does not allow for timely reporting of system faults to the operator.

US2017/144232 relates to a key cutting machine comprising a suction system with a tube which, when necessary, can be connected to a special suction port made in a housing above the cutting disc so as to collect all the residues present inside said housing, or the tube can be disconnected from said suction port to be used as a portable vacuum cleaner to clean the cutting area or the surrounding areas from residues.

### OBJECTS OF THE INVENTION

The object of the invention is to propose a key cutting machine which, while ensuring complete cleanliness of the processing area, does not present the drawbacks of known key cutting machines.

In particular, the object of the invention is to propose a key cutting machine that ensures the cleanliness of the processing area without requiring manual intervention by the operator when necessary.

Another object of the invention is to propose a cutting machine that allows to overcome, at least in part, the drawbacks of the known solutions.

Another object of the invention is to propose a key cutting machine that is easy to install and that in practice only requires a connection to the electricity distribution network.

Another object of the invention is to propose a key cutting machine that allows all the drawbacks recognizable by the state of the art to be overcome without substantially causing any actual increase in size.

Another object of the invention is to propose a key cutting machine that allows for constant monitoring of the processing area and to intervene automatically whenever residues from previous processes are present in it.

Another object of the invention is to propose a cutting machine that is highly automated.

Another object of the invention is to propose a cutting machine that is suitable for professional or semi-professional use.

Another object of the invention is to propose a cutting machine that is simple, quick and intuitive to use.

Another object of the invention is to propose a cutting machine with reduced overall dimensions.

Another object of the invention is to propose a cutting machine that is an improvement and/or alternative to traditional solutions.

Another object of the invention is to propose a cutting machine with an alternative characterization, both in functional and implementational terms, compared to traditional ones.

### SUMMARY OF THE INVENTION

All these objects and others that will result from the following description are jointly or separately achieved, according to the invention, with a key cutting machine as defined in claim 1.

### DESCRIPTION OF THE FIGURES

The present invention is further clarified below in some of its preferred practical embodiments reported for purely exemplifying and non-limiting purposes with reference to the attached drawings, wherein:

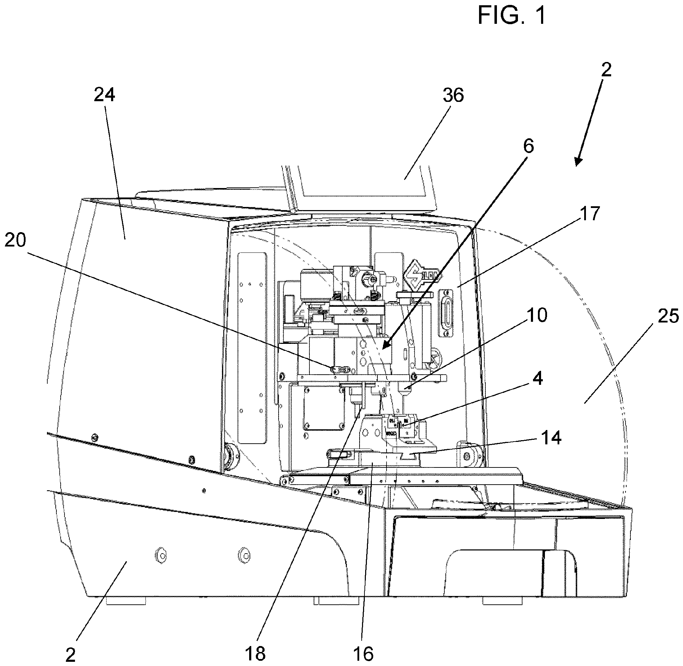

- figure 1: shows a front perspective view of a key cutting machine according to the invention,

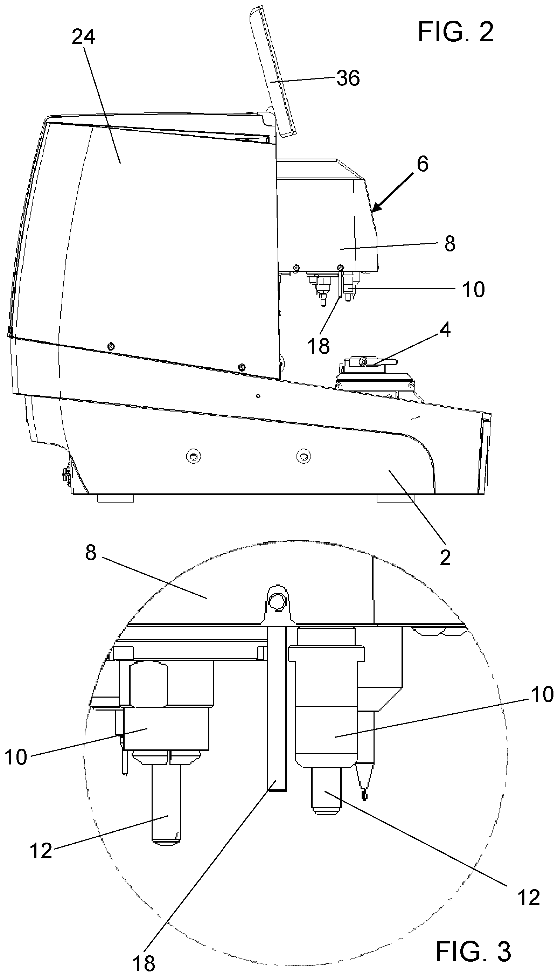

- figure 2: shows it in lateral view,
- figure 3: shows an enlarged detail of Fig . 2,

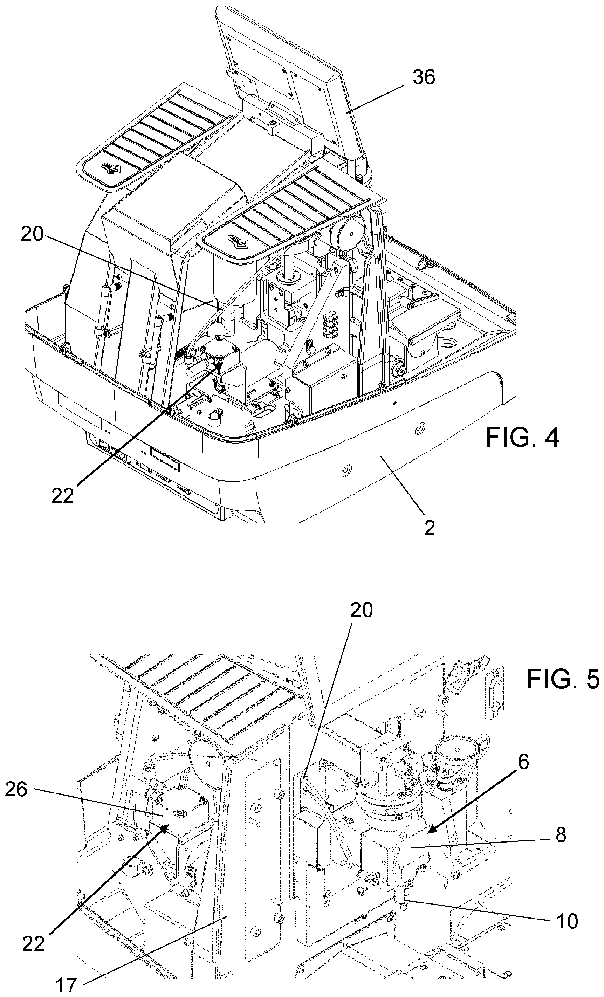

- figure 4: shows it in rear perspective view without casing,
- figure 5: shows an enlarged detail of Fig . 4,

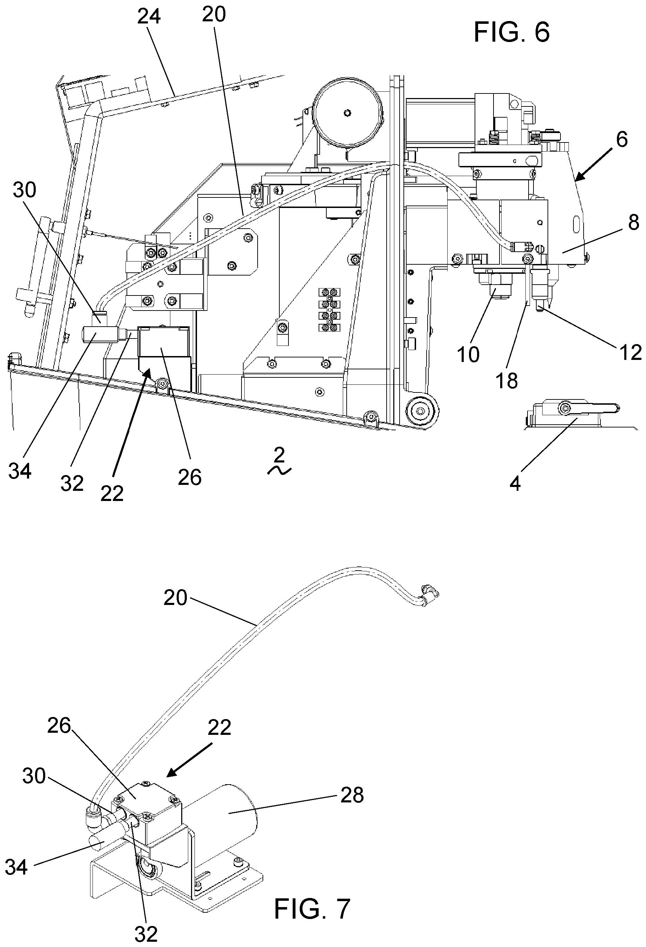

- figure 6: shows a side view of the cutting machine without the casing and part of the base, and
- figure 7: shows the detail of the connection of the compressed air generator with the compressed air delivery nozzle.

### DETAILED DESCRIPTION OF THE INVENTION AND SOME OF ITS PREFERRED EMBODIMENTS

As can be seen from the figures, they illustrate a key cutting machine which is indicated globally with the reference number 1. Preferably, the cutting machine 1 is of the code type, since the cutting of a blank key does not require the presence of an original key to be copied but simply requires the bitting code of that key to be duplicated.

The machine 1 comprises a base 2, on which is mounted a clamp 4 for locking a blank key to be cut, and a milling unit 6 having at least one cutter 12 for making cutting notches in said key. Preferably, said milling unit 6 comprises a head 8 provided with a chuck 10 for a cutter 12 capable of operating on the key locked in the clamp 4 or with a plurality of chucks 10, on each of which is mounted a different cutter 12 capable of operating on the key locked in the clamp 4. Preferably, the cutter 12 comprises an end mill or other cutting tool with a rotating tip, which is driven into rotation by said motor around its longitudinal development axis.

Conveniently, in a traditional manner, the milling unit 6 comprises an external covering casing inside which at least one electric motor is housed to rotate the cutter 12 when it is mounted on a corresponding chuck 10; conveniently, inside said casing there are also housed mechanical motion transmission parts that connect the output shaft of the motor with the cutter 12. Preferably, the casing is open at the bottom so that the chuck 10 or the cutter 12 protrude from the casing itself in order to be able to carry out the machining operations. Conveniently, the key cutting machine 1 is of a professional or semi-professional type, i.e. it is of the type generally present and used in key duplication centres/shops. In particular, the key cutting machine 1 is of a type that is not suitable for use in an industrial field and/or in mass production.

The cutting machine 1 also comprises means for the relative movement of said cutter 12 with respect to said clamp 4.

Conveniently, the clamp 4 is mounted on a first slide 14 sliding horizontally in a longitudinal direction along a second slide 16, sliding horizontally in a transverse direction along the base 2 of the machine, or vice versa. The movements of the first slide 14 with respect to the second slide 16 and of this with respect to the base 2 can be obtained with traditional techniques, preferably with stepper motors controlled by a control unit, which coordinates the entire operation of the machine. Similarly, the vertical movements of the milling head 8 are also preferably obtained with a stepper motor controlled by the same control unit.

In an alternative embodiment not shown, the clamp 4 can be configured to also move vertically while the head 8 is fixed, or conversely the head 8 can be configured to be able to move both vertically and horizontally in the longitudinal direction and horizontally in the transverse direction while the clamp 4 is fixed, or both the clamp 4 and the head 8 can be configured to move in the three directions just mentioned.

Conveniently, on the base 2 a dividing element 17 is mounted, which separates a front processing area, wherein the tools of the milling unit 6 operate, from a rear part. Preferably, the machine 1 comprises a protective casing 24 for the rear part. Preferably, various mechanical, electric and electronic components for the correct operation of the machine are housed in the rear part. Preferably, the milling unit 6 protrudes from said dividing element 17 into said processing area. Preferably, said dividing element 17 is substantially vertical in development and, more preferably, is defined by a substantially vertically developed dividing wall (or even more dividing walls), which is mounted on said base 2. In particular, the front processing area and the rear part are defined above the base 2 and are separated from each other by said dividing element 17.

The machine 1 comprises a compressed air generator 22 which is mounted on said base 2 and which is connected via a small tube or a flexible duct 20 to a nozzle 18 which is mounted on said milling unit and which is oriented towards the processing area of said milling cutter 12.

Conveniently, the nozzle 18 is also applied/mounted on the head 8 of the milling unit 6, which is connected via the small tube or flexible duct 20 to the compressed air generator 22. Conveniently, the compressed air generator 22 is placed in a special compartment created in the rear part of the base 2 of the machine and is covered by a protective casing 24. Preferably, said protective casing 24 is removably applied to the base 2.

Conveniently, said nozzle 18 is positioned above the clamp 4. Preferably, said nozzle 18 is oriented substantially perpendicularly, or in any case is angled, with respect to the two directions (perpendicular to each other) of movement of the clamp 4.

Preferably, said nozzle 18 is positioned at or in proximity to a chuck 10 of the milling unit 6.

Preferably, said nozzle 18 is oriented substantially vertically.

Preferably, said nozzle 18 is oriented substantially parallel to at least one chuck 10 of said milling unit 6 and, in particular, is oriented substantially parallel to the direction of development of at least one chuck 10 for an end mill cutter 12.

Preferably, said nozzle 18 is substantially adjacent to a chuck 10 for an end mill cutter 12 or other rotating tip cutting tool, which is driven into rotation by said motor around its longitudinal development axis.

Preferably, the connection between the nozzle 18 and the small tube or flexible duct 20 is hidden - that is, it is not visible and accessible to the operator - during normal operation of the machine 1.

Preferably, said small tube or flexible duct 20 is completely or mostly housed inside the external casing covering the milling unit 6 and the protective casing 24. Conveniently, the small tube or flexible duct 20 - mostly or completely - is hidden (i.e. it is not visible and accessible to the operator) during normal operation of the machine 1.

Conveniently, the dividing element 17 comprises an opening to allow the passage of said small tube or flexible duct 20 from the rear part of the base 2 to the milling unit 6.

Conveniently, the processing area, and preferably therefore the front processing area, is protected from the environment external to the machine by means of a movable and/or removable front cover element 25. Preferably, the cover element 25 is articulated to said dividing element 17 or to said base 2 so as to be able to uncover and access the processing area by rotating or in any case moving said front cover element 25. Advantageously, said front cover element 25 is at least partially transparent, so that the state of the processing area and/or of the milling unit 6 can be visually checked even while said front cover element 25 covers said processing area.

Preferably, the compressed air generator 22 comprises a pneumatic pump 26. Preferably, said pneumatic pump 26 is driven by an electric motor 28 and provided with a delivery port 30, to which the small tube or flexible duct 20 is applied, and a suction port 32, to which a filter 34 can advantageously be applied. The electric motor 28 and therefore the pneumatic pump 26 can be driven by manual command by the operator, for example via touch screen 36 (or other user interface), which a code cutting machine is generally provided with, or by automatic intervention by the machine control unit based on a pre-set operating program.

Preferably, the compressed air generator 22 comprises a pneumatic pump 26 which is controlled by at least one control unit, more preferably by a control unit which manages the entire operating cycle of the machine.

Preferably, the small tube or flexible duct 20 can be interposed between said nozzle 18 and the delivery port 30 of said pneumatic pump 26.

Preferably, the small tube or flexible duct 20 can be interposed between said nozzle 18 and the suction port 32 of said pneumatic pump 26.

Preferably, the electronic components of the cutting machine are housed in the rear part. Conveniently, the cutting machine comprises at least one control unit programmed to supervise the operation of the machine. Conveniently, therefore, said at least one control unit is programmed to control the movements of the tools of the milling unit 6. Preferably, said control unit is also programmed to control said compressed air generator 22. Conveniently, the machine 1 can comprise two separate control units, of which a first unit is programmed to control the operation of the machine relating to the machining operations, and a second unit is programmed to control the operation of said generator 22.

The operation of the cutting machine according to the invention derives from what has now been described. During the same operation of a cutter 12, that is, when this is in contact with the key to be cut, given the solidarity between the chucks 10 of the head 8 and the nozzle 18, when the head 8 approaches the key to make a cutting notch with its cutter 12, the nozzle 18 also approaches the key and a command - preferably automatic - given to the electric motor 28 activates the pneumatic pump 26 and thus sends - through the small tube or flexible duct 20 and the nozzle 18 - a flow of pressurized air into the processing area, removing any processing residue from it.

The activation of the pneumatic pump 26 can occur in various ways: one of these provides, as has been said, that the operator manually controls such activation, for example by acting on the touch screen 36 every time he notices processing residues on the key being processed and on the processing area. As an alternative to the manual control, the invention also provides for an automatic control, and more particularly provides that every time a cutter 12 is activated, the pneumatic pump 26 is also activated. However, it is also provided that the operating program of the machine can include an express command to activate the pneumatic pump 26 after the intervention of a cutter 12. Conveniently, the control unit is configured to control the activation of said pneumatic pump 26 with a periodicity defined by the operating program of the machine. Preferably, the control unit can be configured to control the intervention of said pneumatic pump 26 at the beginning of each cutting cycle.

In a preferred and possible more sophisticated embodiment, the key cutting machine according to the invention can be provided with a camera, preferably oriented so as to detect the processing area of said cutter 12, designed to check the correct execution of the duplication phases. Conveniently, this camera can also detect the cleaning conditions of the processing area so that the activation of the pneumatic pump 26 can be controlled whenever it detects the presence of processing residues in the processing area.

Preferably, a program can be loaded into a control unit of the machine 1 which provides for detecting the processing area of said cutter 12 at the start of the cutting processing, for storing the image thus detected, for then detecting said processing area at a pre-set periodicity, for comparing the detected image with the previously stored image, and for commanding the activation of said pneumatic pump 26 every time said comparison signals the presence of processing residues in a quantity exceeding a pre-set threshold.

For example, at the beginning of each cutting cycle, the machine control unit can command the camera to capture an image of the perfectly clean processing area and can then periodically compare the actual image captured during processing with the image stored at the beginning of processing and command the intervention of the pneumatic pump 26 whenever this appears appropriate.

Preferably, said camera is mounted on the head 8 of said milling unit 6.

In a different embodiment, not shown, it is provided that the nozzle 18 is connected to the suction port 32 instead of the delivery port 30 of the pneumatic pump 26, so as to create a depression in the processing area and to attract the processing residues instead of dispersing them. In this case, some device must then advantageously be provided to separate the processing residues from the air flow.

Conveniently, in a further embodiment, the compressed air generator 22 is configured for both suction and blowing an air flow to/from the processing area and it is possible to easily switch from one to the other by connecting the nozzle 18 to the respective port 30, 32 of the pneumatic pump 26. Preferably, the generator 22 can be positioned close to the edges of the base 2 and/or the casing 24 so that it is easily accessible. Advantageously, the casing 24 can comprise a small door (not shown) for easy access to the generator 22.

Conveniently, the compressed air generator 22 is fully integrated into the cutting machine. Conveniently, as already described, the generator 22 is housed inside the base 2 and, in particular, it is completely housed inside the rear part of the machine 1. Preferably, the compressed air generator 22 is configured to generate, through the nozzle 18, a blow/suction of air capable of cleaning the entire processing area of the tools of the head 8 of the milling unit 6 from machining residues. Advantageously, in this way the operator's intervention is not required to clean the processing area. Advantageously, the nozzle 18 is positioned stably on the head 8 so that it is not necessary to protect the nozzle itself from contact with the surrounding tools, i.e. so that the nozzle 18 is sufficiently spaced from the surrounding tools so as not to be damaged.

The advantages that the cutting machine according to the invention has compared to the cutting machines according to the state of the art are evident. In particular, the cutting machine according to the invention:
- allows to have direct control over the generation of a compressed air flow without having to depend on external sources and without having cumbersome and uncomfortable connections with these;
- thanks to the autonomy of the compressed air flow generation, it allows to directly detect any malfunctions of the generator itself from the touch screen of the machine and to intervene immediately to remove them and start the duplication processing;
- frees the operator from the burden of manually intervening to clear the processing area of processing residues, always ensuring the absence of these residues which can cause machine operating anomalies;
- allows to program the automatic cleaning of the processing area, reducing cleaning interventions to a minimum but at the same time always ensuring perfect processing conditions;
- it does not implicate any increase in the overall dimensions of the cutting machine, since the compressed air generator can find a suitable arrangement inside the protective casing of the machine, where there is generally always free space for this purpose.

In particular, unlike US2017/144232 wherein there is a fluid passage port (not a nozzle) between the suction system tube and the milling disc cover housing, in the solution according to the present invention a nozzle is provided that is oriented towards the processing area of the milling cutter. Furthermore, unlike US2017/144232, in the solution according to the present invention the compressed air generator is mounted on the base of the machine. Advantageously, this allows the processing area to be quickly cleaned of processing residues without having to detach or manipulate any tube, as instead required in US2017/144232, and at the same time does not implicate any actual increase in the overall dimensions of the machine itself.

The present invention has been illustrated and described in some of its preferred embodiments, but it is understood that executive variations may be made to it in practice, without however departing from the scope of production of the present patent for industrial invention.

## Claims

1. Key cutting machine with a base (2), with a clamp (4) for locking a blank key to be cut, with a milling unit (6) having at least one cutter (12) for making cutting notches in said key, and with means for the relative movement of said cutter with respect to said clamp, **characterised in that** it comprises a compressed air generator (22) mounted on said base (2) and connected via a small tube or flexible duct (20) to a nozzle (18) which is mounted on said milling unit (6) and which is oriented towards the processing area of said cutter (12).

2. Machine according to claim 1, **characterised in that** said compressed air generator (22) comprises a pneumatic pump (26) controlled by at least one control unit which manages the entire operating cycle of the machine.

3. Machine according to claim 2, **characterised in that** the control unit is configured to command the intervention of said pneumatic pump (26) with a periodicity defined by the operating program of the machine.

4. Machine according to one or more of the preceding claims, **characterised in that** the control unit is configured to command the intervention of said pneumatic pump (26) at the beginning of each cutting cycle.

5. Machine according to one or more of the preceding claims, **characterised in that** it comprises a camera oriented so as to detect the processing area of said cutter (12).

6. Machine according to claim 5, **characterised in that** said camera is mounted on the head (8) of said milling unit (6).

7. Machine according to claim 5 and/or 6, **characterised in that** a program is loaded into the machine control unit which provides for detecting the processing area of said cutter (12) at the start of the cutting processing, for storing the image thus detected, for then detecting said processing area at a pre-set periodicity, for comparing the detected image with the previously stored image, and for commanding the activation of said pneumatic pump (26) every time said comparison signals the presence of processing residues in a quantity exceeding a pre-set threshold.

8. Machine according to one or more of the preceding claims, **characterised in that** said small tube or flexible duct (20) is interposed between said nozzle (18) and the delivery port (30) of said pneumatic pump (26).

9. Machine according to one or more of the preceding claims, **characterised in that** a filter (34) is applied to the suction port (32) of the pneumatic pump (26).

10. Machine according to one or more of the preceding claims, **characterised in that** said small tube or flexible duct (20) is interposed between said nozzle (18) and the suction port (32) of said pneumatic pump (26).

11. Machine according to one or more of the preceding claims, **characterised in that** said compressed air generator (22) is placed in a compartment created in the rear part of the base (2) of the machine and is covered by a protective casing (24).

12. Machine according to one or more of the preceding claims, **characterised in that** said nozzle (18) is oriented substantially vertically.

13. Machine according to one or more of the preceding claims, **characterised in that**:
- said milling unit (6) comprises a head (8) provided with at least one chuck (10) for an end mill cutter (12), or other equivalent cutting member rotating around its longitudinal development axis, capable of operating on the key locked in the clamp (4),
- said nozzle (18) is arranged next to said at least one chuck (10) and is oriented substantially parallel to the longitudinal development direction of said at least one chuck (10).

14. Machine according to one or more of the preceding claims, **characterised in that**:
- said compressed air generator (22) is mounted on said base (2) so as to be hidden during normal operation of the machine (1),
- the small tube or flexible duct (20) that connects the compressed air generator (22) to the nozzle (18) is completely or mostly hidden during normal operation of the machine (1).

15. Machine according to one or more of the preceding claims, **characterised in that**:
- the milling unit (6) comprises an external cover casing,
- the small tube or flexible duct (20) which connects the compressed air generator (22) to the nozzle (18) is completely or mostly housed and/or covered by the external casing covering the milling unit (6) and by the protective casing (24) which covers the rear part of the base (2).
